# EUROPEAN PATENT SPECIFICATION

(11) **EP 3 214 946 B1**
(45) Date of publication and mention of the grant of the patent: **17.01.2024**
(21) Application number: 15788081.6
(22) Date of filing: 03.11.2015
(51) Int. Cl.: A23K 50/45

(54) **EXTRUDED PET FOOD PRODUCT**
EXTRUDIERTES HAUSTIERFUTTERPRODUKT
PRODUIT ALIMENTAIRE EXTRUDÉ POUR ANIMAUX DE COMPAGNIE

(30) Priority: 04.11.2014 EP 14306763
(43) Date of publication of application: 13.09.2017
(73) Proprietor: Mars, Incorporated, McLean, VA 22101 (US)
(72) Inventor: DANSET, Gaetan, 30470 Aimargues (FR); DRELON, Nicolas, 30470 Aimargues (FR); ECOCHARD, Claude, 30470 Aimargues (FR)
(74) Representative: Cabinet Nony
(86) International application number: PCT/EP2015/075648
(87) International publication number: WO 2016/071372

(56) References cited:
- EP-B1- 2 413 722
- GB-A- 1 456 433
- US-A- 4 190 679
- US-A1- 2006 240 169
- US-A1- 2010 233 756
- ROKEY, G. J., PLATTNER, B., AND DE SOUZA, E.M.: "FEED EXTRUSION PROCESS DESCRIPTION", REVISTA BRASILEIRA DE ZOOTECNIA - BRAZILIAN JOURNAL OF ANIMAL SCIENCE, vol. 39, no. S, 2010, pages 510-518, XP002752877, Universidade Federal de Vicosa ISSN: 1516-3598
- YU X ET AL: "Uncertainty analysis of hygrometer-obtained water activity measurements of saturated salt slurries and food materials", FOOD CHEMISTRY, ELSEVIER LTD, NL, vol. 115, no. 1, 1 July 2009 (2009-07-01), pages 214-226, XP025993141, ISSN: 0308-8146, DOI: 10.1016/J.FOODCHEM.2008.12.001 [retrieved on 2009-02-26]
- SCOTT V N ET AL: "INFLUENCE OF TEMPERATURE ON THE MEASUREMENT OF WATER ACTIVITY OF FOOD AND SALT SYSTEMS", JOURNAL OF FOOD SCIENCE, WILEY-BLACKWELL PUBLISHING, INC, US, vol. 48, no. 2, 1 January 1983 (1983-01-01), pages 552-554, XP002584537, ISSN: 0022-1147
- VOS P T ET AL: "TECHNIQUE FOR MEASUREMENT OF WATER ACTIVITY IN THE HIGH AW RANGE", JOURNAL OF AGRICULTURAL AND FOOD CHEMISTRY, AMERICAN CHEMICAL SOCIETY, BOOKS AND JOURNALS DIVISION, US, vol. 22, no. 2, 1 January 1974 (1974-01-01), pages 327-330, XP001117899, ISSN: 0021-8561, DOI: 10.1021/JF60192A016

## Description

The present disclosure relates to an extruded pet food product which enables satiety to be improved in a pet animal. The present invention relates to an extruded packaged pet food product containing from over 15% to 30% moisture, from 11 % up to 45% carbohydrate, fat and protein, an a_{w} of over 0.7 and a density in the range of 250 to 300 g/l, for use in improving satiety in a pet animal. The disclosure also relates to a method of achieving satiety in an animal, the method comprising feeding an extruded packaged pet food product containing from over 15% to 30% moisture, from 11 % up to 45% carbohydrate, fat and protein an a_{w} of over 0.9 and a density in the range of 250 to 300 g/l to a pet animal.

Over eating and overweight pet animals a current issue to be addressed. There is increased focus on having healthy pet animals, as well as ensuring that the overall general health of pet animals is maintained for as long as possible. This is for their own general health and to enable the pet owner to align themselves with a healthy lifestyle. Overweight and obesity predisposes cats and dogs to a variety of diseases and decreased longevity.

US 4,190,679 discloses a meat-based pet food aimed at gathering the advantages of both dry and intermediate-moisture pet foods in a single ration. GB 1456433 discloses a semi-moist cat food which is microbiologically stable. EP 2413722 relates to an extrusion and conditioning apparatus and does not disclose a pet food composition. Rokey et al. (2004, R. Bras. Zootech, Vol. 39 : 510-518) is a review article relating to feed extrusion processes and does not diclose specific pet food products. Yu et al. (2009, Food Chemistry, Vol. 115 : 214-226) relates to methods of measuring water activity of saturated salt slurries and food materials. Vos et al. (1974, J Agr Food Chem, Vol. 22 (2) : 327-330) pertains to a technique for measurement of water activity in the high A_{w} range. Scott et al. (1983, Journal of Food Science, Vol. 48 : 552-554) relates to the influence of temperature on the measurement of water activity of food and salt systems. US 2006/0240169 discloses puffed pet food for diet control, I particular low energy-dense food products and methods of making low energy-dense food products.

There is a general need in the art to provide pet food products which are able to achieve satiety in a pet animal in particular without the need to add undesirable additional ingredients and without undue burden on the pet owner having to deal with undesirable begging behaviour

In pets, foods with increased fibre or water content are the most satiating. However, both can have limitations in terms of digestibility and faecal consistency, respectively.

The present invention overcomes the above problems in the art, by means of the claimed use and method.

Accordingly, the present invention provides, in a first embodiment, the use of an extruded packaged pet food product containing from over 15% to 30% moisture, from 11 % up to 45% carbohydrate, fat and protein, an a_{w} of over 0.7, and a density in the range of 250 to 300 g/l, for improving satiety in a pet animal. The product used has a pH below 4.5. Improving satiety in a pet animal includes prevention of weight gain and/or weight maintenance. Improving satiety in a pet animal includes inducing a satiety effect and slowing/reducing food intake and/or slowing/reducing energy intake.

The extruded product may have no ingredient applied after extrusion. In the prior art, extruded food products have conventionally been coated after drying with fat such as chicken, pork, lard, copra oil in order to increase palatability and energy supply. Extruded pet food has also been known to be coated with liquid palatants such as digests; solid palatants such as powders and in some cases heat sensitive nutrients are applied to extruded dry pet food for example by coating the pet food with green lipid mussel.

The product of the present disclosure is a natural product providing satiety, as no additional ingredients are used to create the achieved effect and none of the negative associations with known satiety solutions are needed. Typical previous satiety solutions include non-digestible ingredients and may have downsides such as increased faecal quantity and decreased faecal quality.

The product may have from 20% to 27% moisture. The product may have 15% to 20% moisture. The product may have about 18% moisture. The product disclosed herein may have from 13% to 17% carbohydrate.

The disclosed pet food product is preferably for use in achieving satiety in a pet dog or in a pet cat.

The product may be produced at least part in the presence of super heated steam. The product disclosed herein may have an a_{w} of over 0.9 or over 0.92. The product may have an a_{w} of greater than 0.8.

The product may further comprise of an acid, preferably the acid is lactic acid. The acid may be present in the amount of from 0.5 to 10%.

The food product is packaged. The packaging may be any, preferably a sealed package. The material of the package may be paper, card, plastic or foil and/or may be a tin, screw-topped jar or film pouch pack. The package may be hermetically sealed. One packaging may be vacuum packaging. The food product may be packaged under aseptic conditions (e.g. in the present of super heated steam) or may be processed to achieve sterile conditions (e.g. by irradiation).

A second aspect of the disclosure provides a method of achieving satiety in an animal, the method comprising feeding an extruded packaged pet food product containing from over 15% to 30% moisture, from 11 % up to 45% carbohydrate, an a_{w} of over 0.9, and a density in the range of 250 to 300 g/l to a pet animal.

The invention relates to a method of improving satiety in an animal, the method comprising feeding an extruded packaged pet food product containing from over 15% to 30% moisture, from 11 % up to 45% carbohydrate, fat and protein, an a_{w} of over 0.9, and a density in the range of 250 to 300 g/l and a pH below 4.5 to a pet animal.

The packaged extruded pet food product feed according to the second aspect of the disclosure may be produced at least in part in the presence of super heated steam.

All features of the first aspect of the disclosure also applies to the second aspect.

The use of the products of the disclosure include medical and cosmetic weight loss.

The present invention enables a semi-moist pet food product with the moisture levels claimed to be produced and kept in packaging to achieve a long shelf life. One way of obtaining such an extruded pet food product may be by the use of super heated steam. Any process using super heated steam can be used to produce a product according to the present invention.

The pet food product is any format as described in the claims and herein. It may be described as a kibble, snack, treat or biscuit. The texture of the product is soft. The soft texture may contribute toward the satietogenic effect as it promotes chewing and therefore increases the meal time. This soft texture is unexpectedly obtained in the absence of waterbinders, such as glycerol (used to ensure shelf-life stability). The ability to obtain such a soft texture, in combination with the specified water level and a_{w}, to provide a shelf-stable product contributes to the satiegenic effect obtained. The moisture content and texture of the kibble requires a longer chewing time which may contribute to the satietogenic effect.

The pet food product is preferably a commercial pet food product. Such a product is preferably sold as a product to feed to a cat or a dog.

A typical pet food of the disclosure contains about 20-30% crude protein and about 10-20% fat, the remainder being carbohydrate, including dietary fibre and ash.

The remaining components of the food are not essential to the invention and typical standard products can be included. The combined ingredients of the food according to the invention can provide all of the recommended vitamins and minerals for the particular animal in question (a complete and balanced food).

The food is a cooked product, preferably cooked during extrusion. It may incorporate meat or animal derived material (such as beef, chicken, turkey, lamb, fish, blood plasma, marrow bone etc. or one or more thereof). The product alternatively may be meat free (preferably including a meat substitute such as soya, maize gluten or a soya product) in order to provide a protein source. The foodstuff may contain additional protein sources such as soya protein concentrate, milk proteins, gluten etc. The foodstuff may also contain a starch source such as one or more grains (e.g. wheat, corn, rice, oats, barley etc.). The product preferably contains at least one fibre source.

It is common knowledge in the art to produce a product using super heated steam. Such methods are well known and are described in earlier documents such as WO 2009/018990, WO 2009/018996, WO 2009/018997, WO 2010/112097 and WO 2010/108641.

The product being produced at least part in the presence of super heated steam includes one or more of the following:
The extruded product is packaged by providing a gaseous atmosphere with super heated steam in a housing, supplying the product to the gaseous atmosphere, delivering the packaging to the gaseous atmosphere, filling the product into the packaging, sealing the packaging inside the gaseous atmosphere and moving the filled packaging out of the gaseous atmosphere. The temperature of the gaseous atmosphere may be more than 100°C, 120°C, 140°C, 160°C, 180°C or 220°C. The gaseous atmosphere may be at ambient pressure, reduced pressure or elevated pressure. The gaseous atmosphere may be a mixture of a first component, consisting of air and/or another gas, and water vapour as a second component and, at least in a horizontal sub-layer, has a steam content of at least 50% by weight, 60% by weight, 70% by weight, 80% by weight, 90% by weight, 95% by weight, 98% by weight, 99% by weight. The gaseous atmosphere in at least one horizontal partial layer may have an oxygen content of less than 15% by volume, 10% by volume, 8% by volume, 5% by volume, 2% by volume or 1 % by volume. The gaseous atmosphere may be stratified in the vertical direction, with the temperature rising and the oxygen content dropping, towards the top. The extruded product may be dried for a predetermined time before packing by dwelling in the gaseous atmosphere. In the process, the volatile substances escaping from the material, especially flavours, may be extracted from the gaseous atmosphere. The gaseous atmosphere present in the housing may be mixed and vertical stratification may be avoided.

The disclosure relates to a product in a packed form in which the food product be cooked, dried and packaged in an atmosphere of super heated steam.

In the prior art, food products have conventionally been dried down to an a_{w} value (active water content) of about 0.60 or 0.65. The reason for such drying is that higher a_{w} values were understood to lead to uncontrolled growth of any micro-organisms remaining in the product, such as bacteria, fungi, yeast etc. A reduction of pH can also be used to control the growth of spore forming bacteria. Reduction of pH below 4.5 can be achieved by the addition of acid, including lactic acid. The pH reduction can be obtained by acidification of the dry mix during the extrusion process.

More recent studies have shown that substantially less extensive drying of moist products may be sufficient, under certain circumstances, to obtain packaged products with satisfactory long-term storage stability. When a food product is dried in an atmosphere of super heated steam containing less than 3% 0₂ and at a temperature of at least 120°C to an a_{w} value of 0.9 at most or up to 0.92, any surviving micro-organisms are unable to grow provided the product is hermetically packaged while it is still in the atmosphere of super heated steam with an oxygen content of no more than 3% by volume.

A method of producing a packed food product in the presence of super heated steam may comprise cooking a food product at a cooking temperature of at least 100°C, introducing the cooked food product into an atmosphere of super heated steam, the atmosphere of super heated steam containing less than 3% of oxygen and having a temperature of at least 120°C, drying the food product to an a_{w} value in the range of from 0.7 to 0.92 and, in the super heated steam atmosphere, packaging the food product in a packaging container. The packaging container may then be hermetically sealed.

The super heated steam atmosphere during the process may be maintained at a temperature of at least 130°C. The food product may be cooked in water, saturated steam or super heated steam or a mixture. The food may be cooked in an extruder and may be directly extruded to the atmosphere of super heated steam.

According to the super heated process, the food product may be dried during a drying time of at least 20 seconds, 30 seconds, forty seconds, one minute, two minutes, five minutes or ten minutes. The food product may be pasteurised by drying for at least five minutes or at least ten minutes.

The cooked and dried food product may be packaged without addition of any ingredient, including any preservative. During the packaging process, the packaging container may have a protective gas fed in during the packaging.

The temperature of the food product may be maintained at 100°C or above between cooking the food product and sealing the packaging container. The food may be cooked while being extruded. The atmosphere of super heated steam may be maintained at an atmospheric pressure. The protective case may be C0₂ or N₂.

The process of producing the product in the presence of super heated steam may include a method for deep frying foods in which the food is delivered to hot oil or fat and transported out of the hot oil after a predetermined residence time, wherein a steam zone with super heated steam is generated above a free surface of the oil which shields the oil from the ambient air and from which a flow of steam corresponding to an amount of water evaporating from the deep fried foods is withdrawn. The super heated steam may be circulated, in the course of which the steam is extracted from the steam zone, optionally passed through a heat exchanger and returned to the steam zone by a fan. The steam may be blown onto or across the free surface. A volume of steam present or circulating in the steam zone may be kept constant. An oxygen content in the steam zone over the oil may be kept to less than 10% by volume, 5% by volume, 3% by volume, 2% by volume or 1 % by volume. The flow of steam may be at least partially condensed and the energy and/or material may be recovered, especially in order to heat the oil. The disclosed process may include, in the super heated steam process, a method of drying an extruded material including the steps of providing a gaseous atmosphere with a super heated steam in a housing, extruding a material in the housing, drying the material in the gaseous atmosphere and moving the dried material out of the housing. The temperature of the material when it enters the housing may be more than 100°C, 110°C, 120°C, 130°C or 140°C. The gaseous atmosphere may be at a temperature of more than 100°C, 120°C, 140°C, 160°C, 180°C or 220°C. The gaseous atmosphere may be a mixture of a first component consisting of air and/or another gas, such as C0₂, nitrogen or another inert gas and a water vapour as a second component and has a seam content of at least 50% by weight, 60% by weight, 70% by weight, 80% by weight, 90% by weight, 95% by weight, 98% by weight or 99% by weight.

Volatile substances which escape from the material into the gaseous atmosphere, especially flavours, may be extracted from the gaseous atmosphere. After extraction, the substances may be added to the material again. The substances may be added to the material directly or in the form of a carrier material, such as a coating or filling. The method in the presence of super heated steam may include a method of drying material comprising steps of providing a gaseous atmosphere with super heated steam in a housing, transporting material into the housing, drying the material in a gaseous atmosphere, transporting the dried material out of the housing and extracting from the gaseous atmosphere volatile substances which escape from the material into the gaseous atmosphere, especially flavours.

In terms of shelf stability, the peroxide value of the product is preferably less than 10 mEq/kg fat (Eq is the equivalent to 0₂). The Hexanal content is less than 15 ppm The present invention is described in Figures 1 to 6, in which:
Figure 1 shows the process for producing an extruded package pet food product of the claimed invention.
Figure 2 is a graphical representation of the food intake of Beagle dogs fed either the adult control product or the adult test product. The first, second, third and fourth meal food intake are measured from the bottom of the graph up.
Figure 3 is a graphical representation of the meal consumed by Beagle dogs over a 12 hour period fed either the test food product (SHS) or control food product
(Medium). The bars to the left of the pair of bars is the control pet food product (Medium) and the bars on the right are the test pet food product (SHS).
Figure 4 is a graphical representation of the percent amount the Beagle dogs consumed of the test food product (SHS) versus the control food product (Medium).
Figure 5 shows an image of the control pet food product versus the test food product.
Figure 6a and Figure 6b is a graphical representation of the kinetic ingestion of the control pet food product versus the test pet food product in Schnauzer dogs.

### Example

The present invention can be described with reference to the following non-limiting examples.

### Objective

The aim of this trial was to assess the satietogenic effect of an extruded product according to the invention. The comparison is between a product with the same ingredients produced by different technologies and having the formula as set out below:

| Test Product | | |
|---|---|---|
| | % as fed | g/M cal |
| H2O | 25+/-0.5 | 84,6 |
| PB | 22,27 | 75,4 |
| Fat | 6,55 | 22,2 |
| Crude Fiber | 1,12 | 3,8 |
| TDF | 4,72 | 16,0 |
| Starch | 35,72 | 120,9 |
| Ash | 4,91 | 16,6 |
| Energy URC 2006 (kcal/kg) | 2954 | |
| Energy (dry weight) (kcal/kg) | 2741 | |

| Control/Dry Product | | |
|---|---|---|
| | % as fed | g/M cal |
| H2O | 9,5 | 24,6 |
| PB | 25,21 | 65,3 |
| Fat | 13,95 | 36,1 |
| Crude Fiber | 1,25 | 3,2 |
| TDF | 5,26 | 13,6 |
| Starch | 39,37 | 101,9 |
| Ash | 5,61 | 14,5 |
| Energy URC 2006 (kcal/kg) | 3863 | |
| Energy (kcal (dry weight) /kg) | 3625 | |

### Conditions

The test product of the disclosure was produced using the following process:
Preconditioner settings included a product with 29% moisture.

The product was extracted under a temperature of around 125°C and a pressure of around 20 bar.

The product was extracted into superheated steam atmosphere of between 120 - 140°C.

The product had a round shape, with dimensions of 13 mm, thickness of 7 mm and a die plate which was round, having dimensions of 7.3 mm.

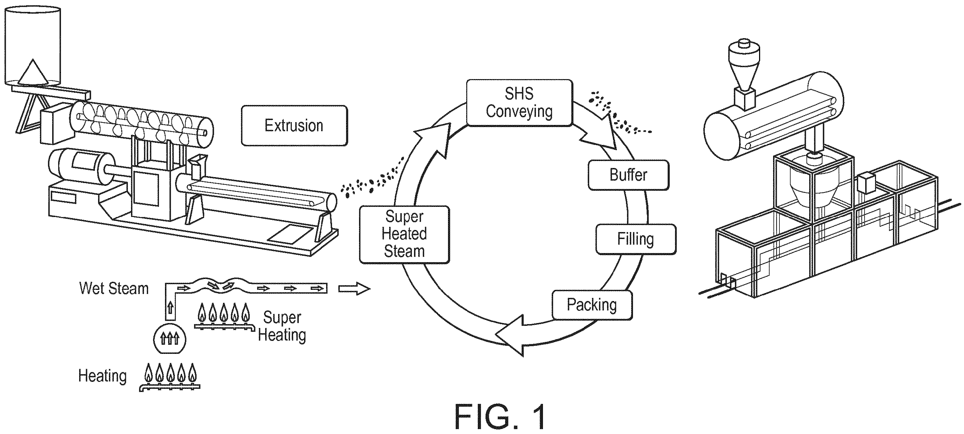

The process is diagrammatically represented in Figure 1 .

### Protocol

A two product ranking test was conducted. Two products were used according to the above formula

The design used for the test was a random crossover test. Each week, dogs had three meals (kinetics) with one of the two diets (the test or the control). The following week, the alternative test or control diet was used

A description of the test is set out as follows:

| **Day** | Saturday | Sunday | Monday | Tuesday | Wednesday | Thursday | Friday |
|---|---|---|---|---|---|---|---|
| **Product** | Satiety | Satiety | Test or control product | Satiety | Test or control product | Satiety | Test or control product |
| **Allowance** | 100% Energy requirement | 100% Energy requirement | Kinetic | 80% Energy requirement | Kinetic | 80% Energy requirement | Kinetic |

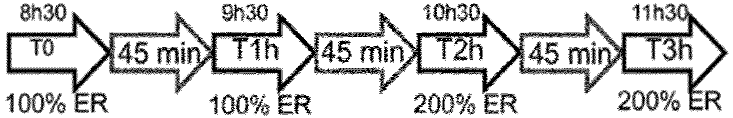

for 15 min for 15 min for 30 min for 30 min

The outcome was that there was a total food intake in kcal/kg⁰⁷⁵ at each kinetic.

The test was carried out on 10 adult Beagle dogs. The dogs had access to unlimited water.

The energy allowance was:
- 120 kcal/kg^{0,75} compounds to 100% of the Energy Requirement
- 240 kcal/kg^{0,75} corresponds to 200% of the Energy Requirement

The results also included the fact that in terms of digestibility, no diarrhoea nor constipation was observed.

### Product Production

The ingredients for the product, as described above were mixed and extruded. For the test product, the product was produced with at least a part of the product being conducted under super heated steam as described above. The control diet was dried and a coating of fat and palatants, typical of a dried kibble added (poultry fat).

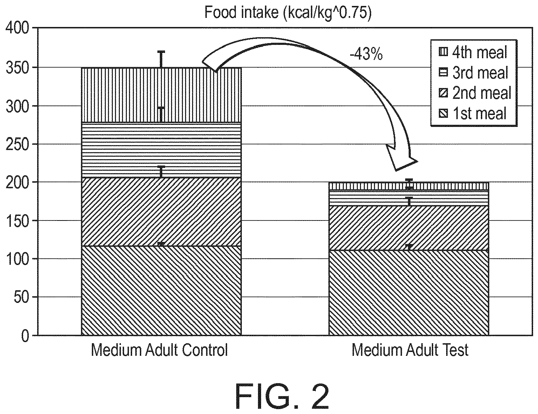

The results are shown in Figure 2.

Figure 2 shows that the test diet is eaten at 43% less than the control diet.

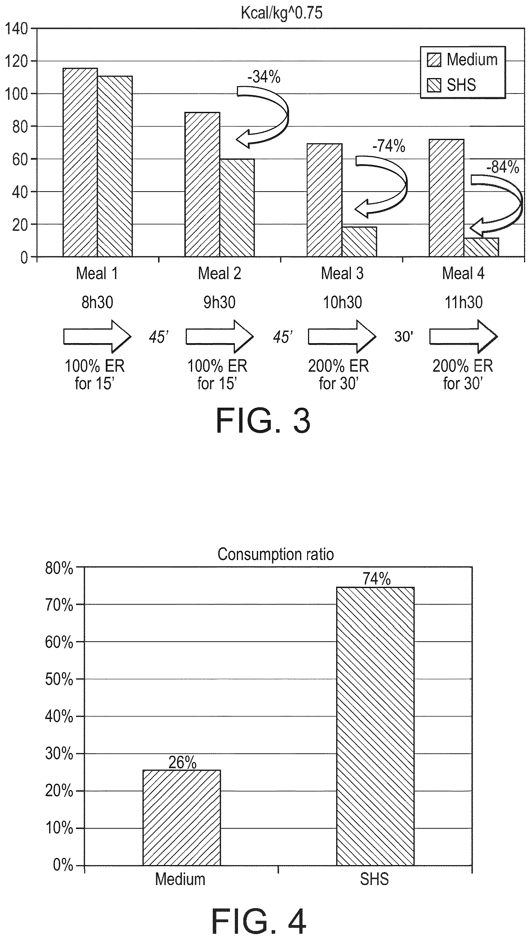

### Further results are seen in Figure 3

Figure 3 shows that the satiety effect appears after the first meal (34% decrease of meal consumption).

### Further results are shown in Figure 4

Figure 4 shows that the superior palatability of the products confirm that the satiety cannot be explained by a less palatable product, but the combination of the low energy diet and a soft texture which tends to increase the time between meals

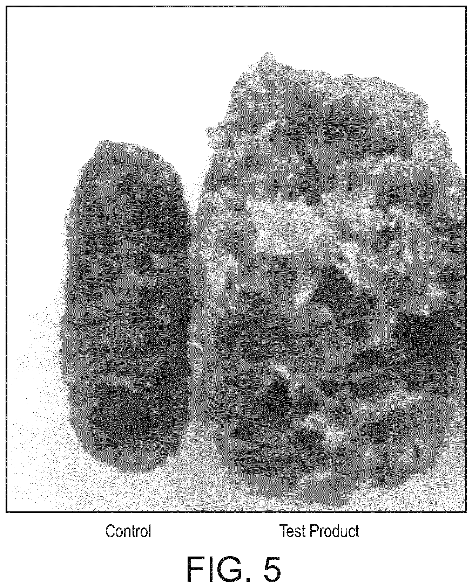

Further results are shown in Figure 5.

Figure 5 shows the appearance of the test product pet food versus the control pet food product.

A two product ranking test was performed with 7 Schnauzer dogs. The dogs were scaled and polished two weeks before the beginning of the study. The dogs were fed the control diet over a 10 day period and then fed the test product for ten days. For both diet periods, the dental plaque deposit was brushed before the first meal and monitored after the meal on day 10 (percentage of surface plaque).

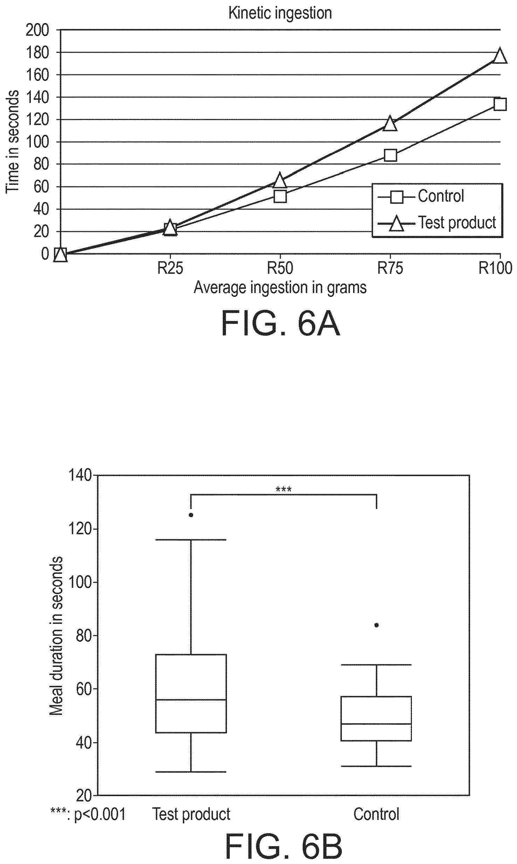

Further results are shown in Figure 6.

Figure 6 (A) and (B) shows that the dogs fed the test product pet food versus the control fed dogs took longer to ingest the pet food (significant increase of 19.1 %); thereby increasing the time for mastication and increasing satiety in dogs.

### Conclusion

The products defined according to the invention induce satiety in dogs without any adverse effect on digestibility and palatability.

## Claims

1. The use of an extruded packaged pet food product containing from over 15% to 30% moisture, from 11% up to 45% carbohydrate, fat and protein, an a_{w} of over 0.7, a density in the range of 250 to 300 g/l and a pH below 4.5, for improving satiety in a pet animal.

2. The use of an extruded pet food product as claimed in claim 1, wherein the extruded product has no ingredient applied after extrusion.

3. The use of an extruded pet food product as claimed in claim 1 or claim 2, wherein the product has from 20% to 27% moisture.

4. The use of an extruded pet food product as claimed in ciaim 1 or ciaim 2, wherein the extruded product has from 15% to 20% moisture.

5. The use of an extruded pet food product as claimed in claim 1 or claim 2, wherein the extruded product has about 18% moisture.

6. The use of an extruded pet food product according to any previous claim wherein the a_{w} is greater than 0.8.

7. The use of an extruded pet food product according to any previous claim, wherein the use in improving satiety includes prevention of weight gain and/or weight maintenance.

8. The use of an extruded pet food product according to any previous claim, wherein the pet food product is for use in improving satiety in a pet dog or a pet cat.

9. The use of an extruded pet food product according to any previous claim, wherein the carbohydrate is present at a level of from 13 to 17%.

10. The use of an extruded pet food product as claimed according to any previous claim produced at least in part in the presence of super heated steam.

11. The use of an extruded pet food product according to any previous claim wherein the product further comprises an acid.

12. The use of an extruded pet food product according to claim 11, wherein the acid is present in the amount of from 0.5 to 10%.

13. The use of an extruded pet food according to claims 11 to 12 wherein the acid is lactic acid.

14. A method of improving satiety in an animal, the method comprising feeding an extruded packaged pet food product containing from over 15% to 30% moisture, from 11% up to 45% carbohydrate, fat and protein, an a_{w} of over 0.9, a density in the range of 250 to 300 g/l and a pH below 4.5 to a pet animal.

15. A method of improving satiety according to claim 14, wherein the pet animal is a pet cat or a pet dog.

## Patentansprüche

1. Verwendung eines extrudierten verpackten Haustierfutterprodukts, das von über 15 % bis 30 % Feuchtigkeit, von 11 % bis 45 % Kohlenhydrate, Fett und Protein enthält, ein a_{w} von über 0,7, eine Dichte in dem Bereich von 250 bis 300 g/l und einen pH-Wert unter 4,5 aufweist, zum Verbessern von Sättigung bei einem Haustier.

2. Verwendung eines extrudierten Haustierfutterprodukts gemäß Anspruch 1, wobei das extrudierte Produkt keinen nach Extrusion aufgebrachten Inhaltsstoff aufweist.

3. Verwendung eines extrudierten Haustierfutterprodukts gemäß Anspruch 1 oder Anspruch 2, wobei das Produkt von 20 % bis 27 % Feuchtigkeit aufweist.

4. Verwendung eines extrudierten Haustierfutterprodukts gemäß Anspruch 1 oder Anspruch 2, wobei das extrudierte Produkt von 15 % bis 20 % Feuchtigkeit aufweist.

5. Verwendung eines extrudierten Haustierfutterprodukts gemäß Anspruch 1 oder Anspruch 2, wobei das extrudierte Produkt etwa 18 % Feuchtigkeit aufweist.

6. Verwendung eines extrudierten Haustierfutterprodukts gemäß einem der vorstehenden Ansprüche, wobei das a_{w} größer als 0,8 ist.

7. Verwendung eines extrudierten Haustierfutterprodukts gemäß einem der vorstehenden Ansprüche, wobei die Verwendung zum Verbessern von Sättigung Verhindern von Gewichtszunahme und/oder Halten von Gewicht einschließt.

8. Verwendung eines extrudierten Haustierfutterprodukts gemäß einem der vorstehenden Ansprüche, wobei das Haustierfutterprodukt zur Verwendung von Sättigung bei einem Haushund oder einer Hauskatze ist.

9. Verwendung eines extrudierten Haustierfutterprodukts gemäß einem der vorstehenden Ansprüche, wobei das Kohlenhydrat in einer Menge von 13 bis 17 % vorhanden ist.

10. Verwendung eines extrudierten Haustierfutterprodukts gemäß einem der vorstehenden Ansprüche, wenigstens teilweise hergestellt in Gegenwart von überhitztem Dampf.

11. Verwendung eines extrudierten Haustierfutterprodukts gemäß einem der vorstehenden Ansprüche, wobei das Produkt ferner eine Säure umfasst.

12. Verwendung eines extrudierten Haustierfutterprodukts gemäß Anspruch 11, wobei die Säure in der Menge von 0,5 bis 10 % vorhanden ist.

13. Verwendung eines extrudierten Haustierfutterprodukts gemäß Ansprüchen 11 bis 12, wobei die Säure Milchsäure ist.

14. Verfahren zum Verbessern von Sättigung bei einem Tier, wobei das Verfahren Füttern eines extrudierten verpackten Haustierfutterprodukts, das von über 15 % bis 30 % Feuchtigkeit, von 11 % bis 45 % Kohlenhydrate, Fett und Protein enthält, ein a_{w} von über 0,9, eine Dichte in dem Bereich von 250 bis 300 g/l und einen pH-Wert unter 4,5 aufweist, an ein Haustier.

15. Verfahren zum Verbessern von Sättigung gemäß Anspruch 14, wobei das Haustier eine Hauskatze oder ein Haushund ist.

## Revendications

1. Utilisation d'un produit alimentaire pour animal de compagnie emballé extrudé contenant plus de 15 % à 30 % d'humidité, de 11 % jusqu'à 45 % de glucides, de la graisse et des protéines, un a_{w} supérieur à 0,7, une densité dans la plage de 250 à 300 g/l et un pH inférieur à 4,5, pour améliorer la satiété chez un animal de compagnie.

2. Utilisation d'un produit alimentaire pour animal de compagnie extrudé selon la revendication 1, le produit extrudé n'ayant pas d'ingrédient appliqué après extrusion.

3. Utilisation d'un produit alimentaire pour animal de compagnie extrudé selon la revendication 1 ou la revendication 2, le produit ayant de 20 % à 27 % d'humidité.

4. Utilisation d'un produit alimentaire pour animal de compagnie extrudé selon la revendication 1 ou la revendication 2, le produit extrudé ayant de 15 % à 20 % d'humidité.

5. Utilisation d'un produit alimentaire pour animal de compagnie extrudé selon la revendication 1 ou la revendication 2, le produit extrudé ayant environ 18 % d'humidité.

6. Utilisation d'un produit alimentaire pour animal de compagnie extrudé selon une quelconque revendication précédente, le a_{w} étant supérieur à 0, 8 .

7. Utilisation d'un produit alimentaire pour animal de compagnie extrudé selon une quelconque revendication précédente, l'utilisation dans l'amélioration de la satiété comprenant la prévention d'un gain de poids et/ou une maintenance de poids.

8. Utilisation d'un produit alimentaire pour animal de compagnie extrudé selon une quelconque revendication précédente, le produit alimentaire pour animal de compagnie étant pour une utilisation dans l'amélioration de la satiété chez un chien de compagnie ou un chat de compagnie.

9. Utilisation d'un produit alimentaire pour animal de compagnie extrudé selon une quelconque revendication précédente, les glucides étant présents à un taux allant de 13 à 17 %.

10. Utilisation d'un produit alimentaire pour animal de compagnie extrudé selon une quelconque revendication précédente produit au moins en partie en la présence de vapeur surchauffée.

11. Utilisation d'un produit alimentaire pour animal de compagnie extrudé selon une quelconque revendication précédente, le produit comprenant en outre un acide.

12. Utilisation d'un produit alimentaire pour animal de compagnie extrudé selon la revendication 11, l'acide étant présent en la quantité allant de 0,5 à 10 %.

13. Utilisation d'un produit alimentaire pour animal de compagnie extrudé selon les revendications 11 à 12, l'acide étant l'acide lactique.

14. Procédé d'amélioration de la satiété chez un animal, le procédé comprenant l'alimentation d'un produit alimentaire pour animal de compagnie emballé extrudé contenant plus de 15 % à 30 % d'humidité, de 11 % jusqu'à 45 % de glucides, de la graisse et des protéines, un a_{w} supérieur à 0,9, une densité dans la plage de 250 à 300 g/l et un pH inférieur à 4,5 à un animal de compagnie.

15. Procédé d'amélioration de la satiété selon la revendication 14, l'animal de compagnie étant un chat de compagnie ou un chien de compagnie.
